# EUROPEAN PATENT APPLICATION

(11) **EP 4 465 377 A1**
(43) Date of publication of application: **20.11.2024**
(21) Application number: 22921036.4
(22) Date of filing: 18.01.2022
(51) Int. Cl.: H01M 4/13, H01M 50/46

(54) **ELECTRODE SHEET, ELECTROCHEMICAL DEVICE, AND ELECTRONIC DEVICE**

(71) Applicant: Dongguan Amperex Technology Limited, Dongguan City, Guangdong Province 523000 (CN)
(72) Inventor: ZHANG, Yuanjie, Dongguan City, Guangdong Province 523000 (CN); FENG, Bo, Dongguan City, Guangdong Province 523000 (CN); SU, Yisong, Dongguan City, Guangdong Province 523000 (CN)
(74) Representative: Icosa
(86) International application number: PCT/CN2022/072533
(87) International publication number: WO 2023/137586

(57) **Abstract**

This application provides an electrode plate, an electrochemical device, and an electronic device. The electrode plate includes a current collector, an active material layer, and an insulation layer. The active material layer is disposed between the current collector and the insulation layer. The insulation layer includes an insulating inorganic compound, a binder, and a polymer. The polymer includes a polymer particle. A number of the polymer particles exposed in any 45 µm × 27 µm region on a surface of the insulation layer is 2 to 60. By controlling the number of polymer particles exposed per unit area of the insulation layer to fall within the above range, this application can enhance a bonding effect between the electrode plate and the separator significantly, and increase the deformation resistance of the electrochemical device, thereby improving stability and safety performance of the electrochemical device.

## Description

### TECHNICAL FIELD

This application relates to the electrochemical field, and in particular, to an electrode plate, an electrochemical device, and an electronic device.

### BACKGROUND

Lithium-ion batteries are widely used in the fields such as wearable devices, smartphones, unmanned aerial vehicles, electric vehicles, and large-scale energy storage equipment by virtue of advantages such as a high energy density, a long cycle life, and no memory effect, and have become the most promising new green chemical power source in the world today. This imposes higher requirements on the safety performance of the lithium-ion batteries.

A separator in a lithium-ion battery is located between a positive electrode plate and a negative electrode plate, and serves a function of isolating the positive electrode plate from the negative electrode plate and conducting lithium ions at the same time. However, under extreme conditions, for example, when a foreign object pierces the separator, the positive electrode plate and the negative electrode plate may come into contact to form an electronic loop, thereby resulting in an internal short circuit and reducing the safety of the lithium-ion battery. Therefore, an electrode plate urgently needs to be developed to improve stability performance and safety performance of lithium-ion batteries.

### SUMMARY

An objective of this application is to provide an electrode plate, an electrochemical device, and an electronic device to improve stability and safety performance of the electrochemical device.

A first aspect of this application provides an electrode plate. The electrode plate includes a current collector, an active material layer, and an insulation layer. The active material layer is disposed between the current collector and the insulation layer. The insulation layer includes an insulating inorganic compound, a binder, and a polymer. The polymer includes a polymer particle. A number of the polymer particles exposed in any 45 µm × 27 µm region on a surface of the insulation layer is 2 to 60.

This application achieves at least the following beneficial effects: in this application, the polymer particles exposed on the surface of the insulation layer bond with adhesive layer particles on the surface of the separator. The adhesive layer particles are usually also polymers. The adhesive layer particles of the separator can exhibit a high effect of fusion and bonding with the polymers in the insulation layer of the electrode plate. Controlling the number of polymer particles exposed per unit area of the insulation layer to fall within the above range can enhance the interfacial bonding effect of the electrode plate, and in turn, improve stability and safety performance of the electrochemical device.

In some embodiments of this application, Dv₅₀ of the polymer particle is 1 µm to 20 µm, and a ratio of the Dv₅₀ of the polymer particle to a thickness d of the insulation layer is k₁, k₁ = Dv₅₀/d, satisfying: 1 ≤ k₁ ≤ 3. By controlling k₁ to fall within the above range, this application can enhance a bonding effect between the electrode plate and the separator significantly, and increase the deformation resistance of the electrochemical device, thereby improving stability and safety performance of the electrochemical device.

In some embodiments of this application, the polymer particle includes a particle of a diameter D. A ratio of the diameter D to a thickness d of the insulation layer is k₂, k₂ = D/d, satisfying: 1 < k₂ ≤ 3. By controlling k₂ to fall within the above range, this application can enhance a bonding effect between the electrode plate and the separator significantly, and increase the deformation resistance of the electrochemical device, thereby improving stability and safety performance of the electrochemical device.

In some embodiments of this application, an exposed area of a single particle among the polymer particles exposed on the surface of the insulation layer is 20 µm² to 315 µm².

In some embodiments of this application, the insulating inorganic compound includes at least one of aluminum oxide, titanium dioxide, magnesium oxide, zirconium oxide, or zinc oxide.

In some embodiments of this application, the polymer includes at least one of polyvinylidene fluoride, polyethylene, or polypropylene.

In some embodiments of this application, the electrode plate is at least one of a positive electrode plate or a negative electrode plate.

A second aspect of this application provides an electrochemical device, including a separator and the electrode plate. The electrode plate provided in this application exhibits a good effect of interface bonding, thereby improving both stability and safety performance of the electrochemical device.

In some embodiments of this application, a substrate of the separator and the polymer are made of an identical material. In this case, a surface, in contact with the insulation layer, of the separator, is coated with no binder layer.

In some embodiments of this application, a substrate of the separator and the polymer are made of different materials. In this case, a surface, in contact with the insulation layer, of the separator, is coated with a binder layer.

In some embodiments of this application, a binder in the binder layer includes at least one of polyvinylidene fluoride, polyacrylate salt, polyacrylic acid, polymethyl methacrylate, polyacrylonitrile, polyamide, polyimide, aramid fibers, polyacrylate ester, styrene-butadiene rubber, polyacrylamide, or polyolefin.

A third aspect of this application provides an electronic device. The electronic device includes the electrochemical device according to any one embodiment of this application. Due to the good stability and safety performance of the electrochemical device provided in this application, the electronic device provided in this application exhibits good stability and safety performance.

This application provides an electrode plate, an electrochemical device, and an electronic device. The electrode plate includes a current collector, an active material layer, and an insulation layer. The active material layer is disposed between the current collector and the insulation layer. The insulation layer includes an insulating inorganic compound, a binder, and a polymer. The polymer includes a polymer particle. A number of the polymer particles exposed in any 45 µm × 27 µm region on a surface of the insulation layer is 2 to 60. In this application, the polymer particles exposed on the surface of the insulation layer bond with adhesive layer particles on the surface of the separator. The adhesive layer particles are usually also polymers. The adhesive layer particles of the separator can exhibit a high effect of fusion and bonding with the polymers in the insulation layer of the electrode plate, thereby enhancing the bonding force of an interface between the electrode plate and the separator, increasing the deformation resistance of the electrochemical device, and in turn, improving the stability and safety performance of the electrochemical device.

### BRIEF DESCRIPTION OF DRAWINGS

To describe the technical solutions in the embodiments of this application or the prior art more clearly, the following outlines the drawings to be used in the embodiments of this application or the prior art. Evidently, the drawings outlined below are merely a part of embodiments of this application.
FIG. 1 is a scanning electron microscopy image of a surface of an insulation layer containing polymer particles according to Embodiment 2;
FIG. 2 is a scanning electron microscopy image of a cross-section of an insulation layer containing polymer particles according to Embodiment 2;
FIG. 3 is a schematic structural diagram of an insulation layer according to an embodiment of this application;
FIG. 4 is a scanning electron microscopy image of a surface of an insulation layer of a conventional electrode plate (Comparative Embodiment 1);
FIG. 5 is a scanning electron microscopy image of a cross-section of an insulation layer of a conventional electrode plate (Comparative Embodiment 1);
FIG. 6 is a scanning electron microscopy image of a surface of an insulation layer of a hot-pressed electrode plate according to Embodiment 2;
FIG. 7 is a scanning electron microscopy image of a cross-section of an insulation layer of a hot-pressed electrode plate according to Embodiment 2;
FIG. 8 is a scanning electron microscopy image of a surface of an insulation layer containing a low content of polymer particles; and
FIG. 9 is a scanning electron microscopy image of a surface of an insulation layer containing a high content of polymer particles.

### DETAILED DESCRIPTION OF EMBODIMENTS

To make the objectives, technical solutions, and advantages of the present invention clearer, the following describes the present invention in more detail with reference to drawings and embodiments. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in specific embodiments of this application, this application is construed by using a lithium-ion battery as an example of the electrochemical device, but the electrochemical device according to this application is not limited to the lithium-ion battery.

An insulating coating layer on the surface of an electrode plate generally includes an insulating material and a binder. However, the binder in the insulating coating layer serves only to bond the insulating material and cannot directly bond with the separator. Therefore, the separator is bonded to the insulating coating layer on the surface of the electrode plate by solely a binder added in the separator, but a high bonding effect between the electrode plate and the separator can directly improve the deformation resistance and hardness of the electrochemical device. In view of the above problem, this application provides an electrode plate, an electrochemical device, and an electronic device to improve stability and safety performance of the electrochemical device.

A first aspect of this application provides an electrode plate, including a current collector, an active material layer, and an insulation layer. The active material layer is disposed between the current collector and the insulation layer. The insulation layer includes an insulating inorganic compound, a binder, and a polymer. The polymer includes a polymer particle. The number of the polymer particles exposed in any 45 µm × 27 µm region on a surface of the insulation layer is 2 to 60. The applicant hereof finds that, if the number of polymer particles exposed per unit area of the insulation layer is unduly small, the bonding effect between the electrode plate and the separator is impaired. If the number of exposed polymer particles is unduly large, there will be excessive sites of bonding between the insulation layer and the separator on the surface of the electrode plate, and the polymer particles will cover an unduly large area after the electrode plate is hot-pressed, thereby resulting in blocking of a lithium ion transport path at the covered point. Consequently, the lithium ion transport is disrupted or incurs an unduly high resistance, thereby impairing the kinetic performance of the electrochemical device. Therefore, by controlling the number of polymer particles exposed per unit area of the insulation layer to fall within the above range, this application can enhance the bonding effect between the electrode plate and the separator, thereby improving stability and safety performance of the electrochemical device.

In some embodiments of this application, the volume median diameter Dv₅₀ of the polymer particle is 1 µm to 20 µm, and a ratio of the Dv₅₀ of the polymer particle to a thickness denoted dof the insulation layer is k₁ , ki= Dv₅₀/d, satisfying: 1 ≤ k₁ ≤ 3. By controlling k₁ to fall within the above range, this application can enhance a bonding effect between the electrode plate and the separator significantly, and increase the deformation resistance of the electrochemical device, thereby improving both stability and safety performance of the electrochemical device. In this application, Dv₅₀ means a particle diameter value corresponding to a cumulative volume percentage 50% in a volume-based particle size distribution curve viewed from a small-diameter side (measurable by using a laser particle size analyzer).

In some embodiments of this application, the polymer particle includes a particle of a diameter D. A ratio of the diameter D to a thickness d of the insulation layer is k₂, k₂ = D/d, satisfying: 1 < k₂ ≤ 3. By controlling k₂ to fall within the above range, this application can enhance a bonding effect between the electrode plate and the separator significantly, and increase the deformation resistance of the electrochemical device, thereby improving stability and safety performance of the electrochemical device.

Understandably, Dv₅₀ of the polymer particles is a statistical value. Among the polymer particles, the diameter of some particles is greater than Dv₅₀, and the diameter of some other particles is less than Dv₅₀. In view of this, the polymer particles of this application include particles of a diameter D. The particles of a diameter D mean the particles of a diameter falling within 1 < k₂ ≤ 3 among the polymer particles, where k₂ is a ratio of the diameter D to a thickness d, and d is the thickness of the insulation layer, in units of µm. For example, when Dv₅₀ of the polymer particles is 6 µm and the thickness of the insulation layer is 4 µm, the particles of the diameter D in the polymer particles may include particles of a diameter greater than 4 µm and less than or equal to 12 µm; when Dv₅₀ of the polymer particles is 6 µm and the thickness of the insulation layer is 2 µm, the particles of the diameter D in the polymer particles may include particles of a diameter greater than 2 µm and less than or equal to 6 µm.

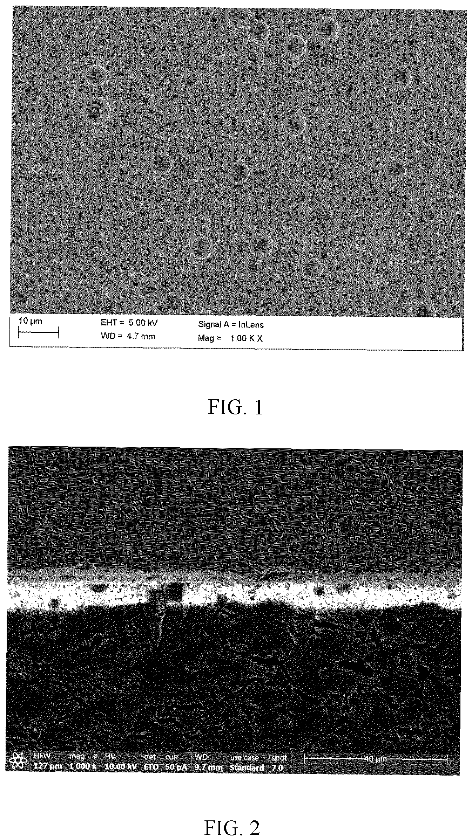

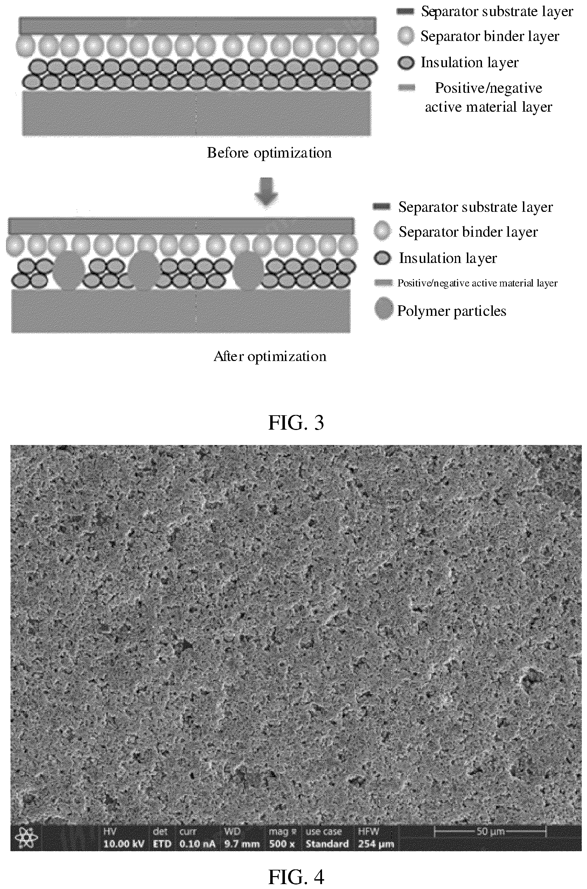

The applicant hereof finds that, after one or more polymers are added into the insulation layer of the electrode plate, the polymers are exposed on the surface of the insulation layer in the form of individual particles or a cluster of polymers due to a large particle size of the polymers, as shown in FIG. 1 and FIG. 2. The polymer particles exposed on the surface of the insulation layer bond with adhesive layer particles on the surface of the separator. The adhesive layer particles are usually also polymers. The particles in the binder layer of the separator can exhibit a high effect of fusion and bonding with the polymers in the insulation layer of the electrode plate, thereby improving the interfacial adhesion between the electrode plate and the separator. On the other hand, because the polymer particles exist penetratingly in the insulation layer, the cohesive force of the insulation layer is improved significantly. Therefore, as shown in FIG. 3, the design of the polymer particles contained in the insulation layer of the electrode plate can significantly improve the interfacial adhesion between the insulation layer and the separator as well as the cohesive force of the inorganic particles in the insulation layer, and improve the deformation resistance of the electrochemical device as a whole, thereby improving stability and safety performance of the electrochemical device.

FIG. 2 shows a scanning electron microscopy (SEM) test for a specimen in which an argon ion cutting technology, also known as ion beam cross-section polishing technology, is applied. A high-quality specimen is obtained by polishing the surface of the specimen and removing the bruise layer.

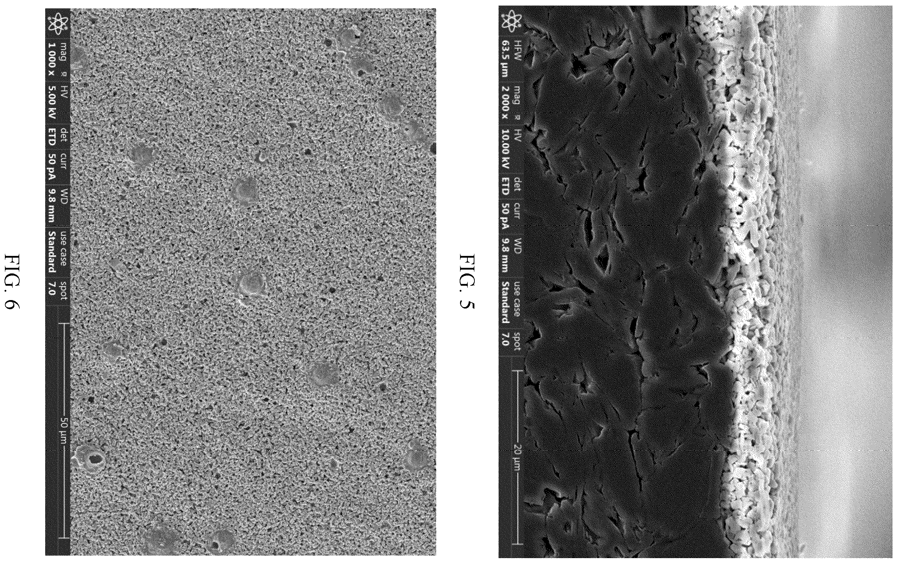

In contrast, as shown in FIG. 4 and FIG. 5, on a conventional electrode plate, because no polymer particles are exposed on the surface of the insulation layer of the electrode plate, the surface of the insulation layer of the electrode plate is a flat and even surface that exhibits some pores and slight roughness, and lacks significant protruding points. Only the adhesive layer particles on the surface of the separator bond with the inorganic particles in the insulation layer of the electrode plate. The inorganic particles in the insulation layer of the electrode plate usually assume a regular shape. Therefore, the effect of bonding between the adhesive layer particle on the surface of the separator and the insulation layer is not good, thereby resulting in a limited effect of bonding between the electrode plate and the separator.

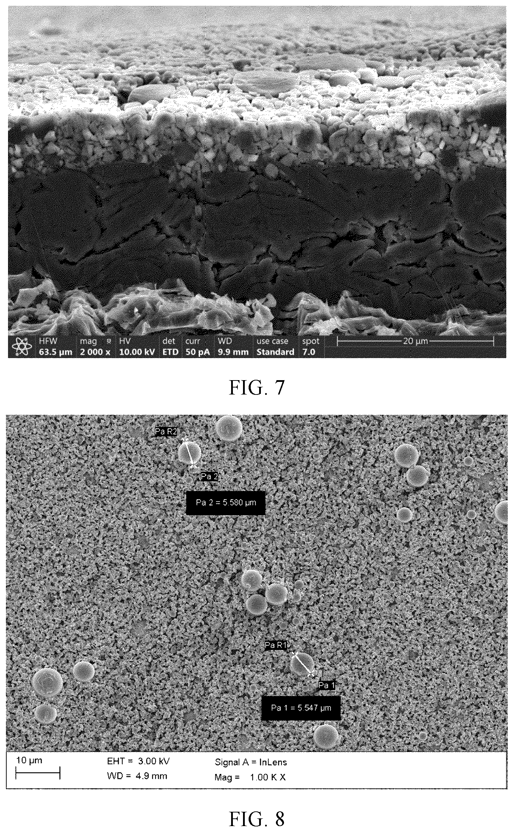

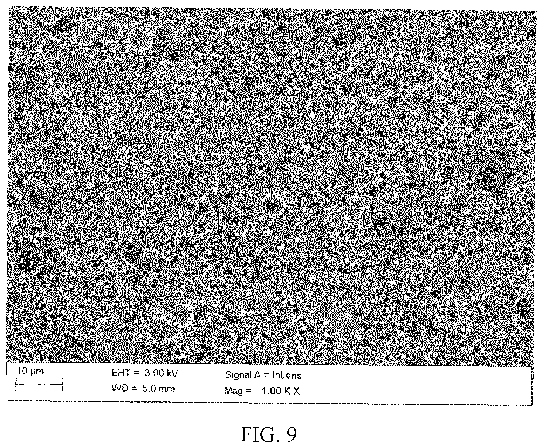

In this application, the insulation layer of the electrode plate contains polymer particles. As shown in FIG. 6 and FIG. 7, protruding dots can still be seen on the surface of the electrode plate after the hot-pressing process in a process of preparing a lithium-ion battery, indicating that the polymer particles can actually serve a function of bonding between the electrode plate and the separator in a lithium-ion battery. The number of the polymer particles exposed per unit area of the insulation layer can be adjusted to adjust the bonding effect between the insulation layer of the electrode plate and the separator, thereby improving the stability and safety performance of the electrochemical device, as shown in FIG. 8 and FIG. 9.

In some embodiments of this application, an exposed area of a single particle among the polymer particles exposed on the surface of the insulation layer is 20 µm² to 315 µm². When the exposed area of a single polymer particle is unduly small, the interfacial bonding effect of the electrode plate will be impaired. If the exposed area of a single polymer particle is unduly large, although the bonding effect between the electrode plate and the separator is improved significantly, severe blockage of pores will occur in partial locations on the surface of the electrode plate, thereby resulting in a decrease in the porosity of the electrode plate and a decline in the kinetic performance of the electrochemical device. Therefore, controlling the exposed area of a single polymer particle to fall within the above range can enhance the interfacial bonding effect of the electrode plate, and in turn, improve stability and safety performance of the electrochemical device.

The insulating inorganic compound is not particularly limited herein, as long as the objectives of this application can be achieved. In some embodiments of this application, the insulating inorganic compound includes at least one of aluminum oxide, titanium dioxide, magnesium oxide, zirconium oxide, or zinc oxide.

The polymer is not particularly limited herein, as long as the objectives of this application can be achieved. In some embodiments of this application, the polymer includes at least one of polyvinylidene fluoride, polyethylene, or polypropylene.

The binder in the insulation layer is not particularly limited herein, as long as the objectives of this application can be achieved. In some embodiments of this application, the binder includes at least one of polyacrylate salt, polyacrylic acid, polyacrylate ester, polymethyl methacrylate, polyacrylonitrile, polyamide, or sodium carboxymethyl cellulose.

The type of the electrode plate is not particularly limited, as long as the objectives of this application can be achieved. In some embodiments of this application, the electrode plate is at least one of a positive electrode plate or a negative electrode plate.

In this application, the positive electrode plate generally includes a positive current collector. The positive current collector is not particularly limited herein, as long as the objectives of this application can be achieved. For example, the positive current collector may include, but is not limited to, aluminum foil, aluminum alloy foil, or a composite current collector. The thickness of the positive current collector is not particularly limited in this application, as long as the objectives of this application can be achieved. For example, the thickness is 8 µm to 12 µm. In this application, the positive active material layer may be disposed on one surface of the positive current collector in a thickness direction or on both surfaces of the positive current collector in the thickness direction. It is hereby noted that the "surface" here may be the entire region of the positive current collector, or a partial region of the positive current collector, without being particularly limited in this application, as long as the objectives of the application can be achieved.

In this application, the positive active material layer includes a positive active material. The type of the positive active material is not particularly limited herein, as long as the objectives of this application can be achieved. For example, the positive active material may include at least one of lithium nickel cobalt manganese oxide (NCM811, NCM622, NCM523, NCM111), lithium nickel cobalt aluminum oxide, lithium iron phosphate, a lithium-rich manganese-based material, lithium cobalt oxide, lithium manganese oxide, lithium manganese iron phosphate, lithium titanium oxide, or the like. In this application, the positive active material may further include a non-metallic element. For example, the non-metallic elements include at least one of fluorine, phosphorus, boron, chlorine, silicon, or sulfur. Such elements can further improve the stability of the positive electrode material.

In this application, the positive active material layer may further include a positive electrode binder. The positive electrode binder is not particularly limited herein, as long as the objectives of this application can be achieved. For example, the binder may include, but is not limited to, at least one of fluorine-containing resin, polypropylene resin, fiber-type binder, rubber-type binder, or polyimide-type binder.

In this application, the positive active material layer may further include a positive conductive agent. The positive conductive agent is not particularly limited herein, as long as the objectives of this application can be achieved. For example, the conductive agent may include, but is not limited to, at least one of conductive carbon black (Super P), carbon nanotubes (CNTs), carbon fibers, acetylene black, flake graphite, Ketjen black, graphene, a metal material, or a conductive polymer. Preferably, the positive conductive agent may include conductive carbon black and carbon nanotubes. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole.

The content of the positive active material, the positive electrode binder, and the positive conductive agent is not particularly limited in this application, and a conventional content in the art may be employed, as long as the objectives of this application can be achieved. For example, based on the mass of the positive material layer, the mass percent of the positive active material is 90% to 98%, the mass percent of the positive electrode binder is 0.5% to 5%, and the mass percent of the positive conductive agent is 0.5% to 5%.

Optionally, the positive electrode plate may further include a conductive layer. The conductive layer is located between the positive current collector and the positive active material layer. The components of the conductive layer are not particularly limited in this application, and may be a conductive layer commonly used in the art. For example, the conductive layer may include, but is not limited to, the positive conductive agent and the positive electrode binder.

In this application, the negative electrode plate typically includes a negative current collector. The negative current collector is not particularly limited herein, as long as the objectives of this application can be achieved. For example, the negative current collector may include, but is not limited to, copper foil, copper alloy foil, nickel foil, stainless steel foil, titanium foil, foamed nickel, foamed copper, or a composite current collector, or the like. The thickness of the negative current collector is not particularly limited in this application, as long as the objectives of this application can be achieved. For example, the thickness is 4 µm to 12 µm. In this application, the negative active material layer may be disposed on one surface of the negative current collector in the thickness direction or on both surfaces of the negative current collector in the thickness direction. It is hereby noted that the "surface" here may be the entire region of the negative current collector, or a partial region of the negative current collector, without being particularly limited in this application, as long as the objectives of the application can be achieved.

In this application, the negative active material layer includes a negative active material. The negative active material is not particularly limited herein, as long as the objectives of this application can be achieved. For example, the negative active material includes a carbon material that enables reversible intercalation and deintercalation of lithium ions. The carbon material may be a carbon material known in the art to for use as a negative active material. For example, the carbon material may include, but without being limited to, crystalline carbon and/or amorphous carbon. The crystalline carbon may include, but without being limited to, amorphous, flake-shaped, mini-flake-shaped, spherical, or fibrous natural graphite or artificial graphite. The non-crystalline carbon may include, but without being limited to, at least one of soft carbon, hard carbon, mesophase pitch carbide, or calcined coke. Illustratively, the negative active material may include, but without being limited to, natural graphite, artificial graphite, mesocarbon microbead (MCMB), hard carbon, soft carbon, silicon, silicon oxide (SiOₓ, x is 1 or 2), or a silicon-carbon composite. In the silicon-carbon composite, a mass ratio between silicon and carbon is 1: 10 to 10: 1, and Dv₅₀ is 0.1 µm to 100 µm.

In this application, the negative active material may further include a negative conductive agent. The negative conductive agent is not particularly limited herein, as long as the objectives of this application can be achieved. For example, the conductive agent may be, but is not limited to, at least one of a carbon-based material, a metal-based material, or a conductive polymer. The carbon-based material is at least one selected from natural graphite, artificial graphite, conductive carbon black, acetylene black, Ketjen black, or carbon fibers. The metal-based material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole.

In this application, the negative active material layer may further include a negative electrode binder. The negative electrode binder is not particularly limited herein, as long as the objectives of this application can be achieved. For example, the negative electrode binder may include, but is not limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, polyacrylic acid, styrene-butadiene rubber, acrylic styrene-butadiene rubber, epoxy resin, or nylon.

Optionally, the negative electrode plate may further include a conductive layer. The conductive layer is located between the negative current collector and the negative active material layer. The components of the conductive layer are not particularly limited in this application, and may be a conductive layer commonly used in the art. The conductive layer may include, but without being limited to, the foregoing conductive agent and binder.

A second aspect of this application provides an electrochemical device. The electrochemical device includes a separator and the electrode plate. The electrode plate provided in this application exhibits a good effect of interface bonding, thereby improving both stability and safety performance of the electrochemical device.

The separator is not particularly limited herein, as long as the objectives of this application can be achieved. For example, the separator may include, but is not limited to, at least one of polyethylene (PE)-based, polypropylene (PP)-based, or polytetrafluoroethylene-based polyolefin (PO) separator, a polyester film (such as polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a laminated film, or a spinning film, and preferably polyethylene or polypropylene. The polyethylene or polypropylene is highly effective in preventing a short circuit, and can improve the stability of the electrochemical device by virtue of a turn-off effect. The separator according to this application may be a porous structure. The pore size of the separator is not particularly limited, as long as the objectives of this application can be achieved. For example, the pore size may be 0.01 µm to 1 µm. The thickness of the separator is not particularly limited in this application, as long as the objectives of this application can be achieved. For example, the thickness may be 5 µm to 500 µm.

In some embodiments of this application, a substrate of the separator and the polymer are made of an identical material. In this case, a surface, in contact with the insulation layer, of the separator, is coated with no binder layer.

In some embodiments of this application, a substrate of the separator and the polymer are made of different materials. In this case, a surface, in contact with the insulation layer, of the separator, is coated with a binder layer.

The binder in the binder layer of the separator is not particularly limited herein, as long as the objectives of this application can be achieved. In some embodiments of this application, a binder in the binder layer includes at least one of polyvinylidene fluoride, polyacrylate salt, polyacrylic acid, polymethyl methacrylate, polyacrylonitrile, polyamide, polyimide, aramid fibers, polyacrylate ester, styrene-butadiene rubber, polyacrylamide, or polyolefin.

The electrochemical device according to this application may further include an electrolyte. The electrolyte may include, but without being limited to, one or more of a gel electrolyte, a solid-state electrolyte, or an electrolyte solution. The electrolyte solution may include a lithium salt and a nonaqueous solvent.

The lithium salt is not particularly limited herein, as long as the objectives of this application can be achieved. For example, the lithium salt may include, but is not limited to, at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, LiBOB, or lithium difluoroborate. Preferably, the lithium salt includes LiPF₆.

The nonaqueous solvent is not particularly limited in this application, as long as the objectives of this application can be achieved. For example, the nonaqueous solvent may include, but is not limited to, at least one of a carbonate compound, a carboxylate compound, an ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but without being limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, or caprolactone. The ether compound may include, but without being limited to, at least one of dibutyl ether, tetraglyme, diglyme, 1,2-dimethoxyethane, 1,2-diethoxyethane, ethoxymethoxyethane, 2-methyltetrahydrofuran, or tetrahydrofuran. The other organic solvent may include, but without being limited to, at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester.

The electrochemical device in this application is not particularly limited, and may be any device in which an electrochemical reaction occurs. In some embodiments, the electrochemical device may include, but without being limited to, a primary battery, a secondary battery, a fuel battery, a solar battery, a capacitor, or the like. Preferably, the electrochemical device may be a lithium secondary battery. The secondary battery may include, but without being limited to, a lithium metal secondary battery, a lithium-ion secondary battery, a lithium polymer secondary battery, a lithium-ion polymer secondary battery, or the like. More preferably, the electrochemical device is a lithium-ion battery.

The process of preparing the electrochemical device is well known to a person skilled in the art, and is not particularly limited in this application. For example, the preparation process may include, but without being limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain an electrochemical device; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte solution into the package, and sealing the package to obtain an electrochemical device. In addition, an overcurrent prevention element, a guide plate, and the like may be placed into the package as required, so as to prevent the rise of internal pressure, overcharge, and overdischarge of the electrochemical device.

A third aspect of this application provides an electronic device. The electronic device includes the electrochemical device according to any one embodiment of this application. Due to the good stability and safety performance of the electrochemical device provided in this application, the electronic device provided in this application exhibits good stability and safety performance.

The electronic device in this application is not particularly limited, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, power tool, unmanned aerial vehicle, handheld vacuum cleaner, bicycle, lighting appliance, toy, game console, watch, electric tool, flashlight, camera, large household battery, lithium-ion capacitor, or the like.

### Embodiments

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Embodiment 1

### <Preparing a positive electrode plate>

Mixing lithium cobalt oxide as a positive active material, acetylene black as a conductive agent, polyvinylidene difluoride (PVDF) as a binder at a mass ratio of 98: 0.8: 1.2, adding N-methyl-pyrrolidone (NMP), and stirring the mixture well with a vacuum mixer to obtain a positive electrode slurry, in which a solid content is 70 wt%. Coating one surface of 12 µm-thick positive current collector aluminum foil with the positive electrode slurry evenly, and drying the aluminum foil at 85 °C to obtain a positive electrode plate coated with a positive material layer on a single side. Repeating the foregoing steps on the other surface of the aluminum foil to obtain a positive electrode plate coated with the positive material layer on both sides. Subsequently, performing cold pressing, cutting, and slitting, and drying the electrode plate in an 85 °C vacuum environment for 12 hours to obtain a positive electrode plate of 72 × 850 mm in size and 0.097 mm in thickness.

### <Preparing a negative electrode plate>

1) Mixing artificial graphite as a negative active material, styrene-butadiene rubber as a binder, and sodium carboxymethyl cellulose as a thickener at a mass ratio of 98: 1: 1, adding deionized water, and stirring the mixture well with a vacuum mixer to obtain a negative electrode slurry, in which a solid content is 75 wt%. Coating one surface of 12 µm-thick negative current collector copper foil with the negative electrode slurry evenly, and drying the copper foil at 85 °C to obtain a negative electrode plate coated with a negative electrode material layer on a single side. Repeating the foregoing steps on the other surface of the copper foil to obtain a negative electrode plate coated with the negative material layer on both sides.
2) Mixing aluminum oxide as an insulating inorganic compound, acrylic acid as a binder, and polypropylene polymer particles at a mass ratio of 95: 3: 2, adding deionized water, and stirring well with a vacuum mixer to obtain an insulation layer slurry in which the solid content is 17 wt%, where Dv₅₀ of the polymer PP particles is 1 µm. Applying the insulation layer slurry evenly onto a surface of the negative electrode plate prepared in step 1), and drying the electrode plate at 85 °C, where the thickness of the insulation layer is 0.67 µm. Subsequently, performing cold pressing, cutting, and slitting for the negative electrode plate coated with the insulation layer, and drying the electrode plate in an 85 °C vacuum environment for 12 hours to obtain a composite negative electrode plate of 74 × 867 mm in size and 0.113 mm in thickness containing the insulation layer.

### <Preparing an electrolyte solution>

Mixing propylene carbonate, ethylene carbonate, and diethyl carbonate at a mass ratio of 1: 1: 1 in an dry argon atmosphere glovebox to obtain an organic solvent, adding a lithium salt LiPF₆ into the organic solvent to dissolve, and stirring the mixture well to obtain an electrolyte solution. The molar concentration of the LiPF₆ in the electrolyte solution is 1 mol/L.

### <Preparing a separator>

Using a 7 µm-thick porous polyethylene film (manufactured by Celgard Co., Ltd.) as a separator, in which the pore diameter is 0.1 µm, the surface of the separator includes polyacrylate ester, the coating mass of the binder layer is 10±2 mg/5000 mm², and the thickness is 3±1 µm.

### <Preparing a lithium-ion battery>

Stacking the prepared positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly into an aluminum plastic film package, drying the packaged electrode assembly, and then injecting the electrolyte solution. Performing steps such as vacuum sealing, static standing, chemical formation, degassing, and edge trimming to obtain a lithium-ion battery. The upper-limit voltage of the chemical formation is 4.45 V, the temperature of the chemical formation is 80 °C, and the static standing time in the chemical formation is 2 hours.

### Embodiments 2 to 9

Identical to Embodiment 1 except that the relevant preparation parameters are adjusted according to Table 1A and Table 1B.

### Embodiment 10

Identical to Embodiment 1 except that the processes of <Preparing a positive electrode plate> and <Preparing a negative electrode plate> are different from those in Embodiment 1.

### <Preparing a positive electrode plate>

1) Mixing lithium cobalt oxide as a positive active material, acetylene black as a conductive agent, polyvinylidene fluoride as a binder at a mass ratio of 98: 0.8: 1.2, adding NMP, and stirring the mixture well with a vacuum mixer to obtain a positive electrode slurry, in which a solid content is 70 wt%. Coating one surface of 12 µm-thick positive current collector aluminum foil with the positive electrode slurry evenly, and drying the aluminum foil at 85 °C to obtain a positive electrode plate coated with a positive material layer on a single side. Repeating the foregoing steps on the other surface of the aluminum foil to obtain a positive electrode plate coated with the positive material layer on both sides.
2) Mixing aluminum oxide as an insulating inorganic compound, acrylic acid as a binder, and polypropylene polymer particles at a mass ratio of 95: 3: 2, adding deionized water, and stirring well with a vacuum mixer to obtain an insulation layer slurry in which the solid content is 17 wt%, where Dv₅₀ of the polymer PP particles is 10 µm. Applying the insulation layer slurry evenly onto a surface of the positive electrode plate prepared in step 1), and drying the electrode plate at 85 °C, where the thickness of the insulation layer is 10 µm. Subsequently, performing cold pressing, cutting, and slitting for the positive electrode plate coated with the insulation layer, and drying the electrode plate in an 85 °C vacuum environment for 12 hours to obtain a composite positive electrode plate of 72 mm × 850 mm in size containing the insulation layer.

### <Preparing a negative electrode plate>

1) Mixing artificial graphite as a negative active material, styrene-butadiene rubber as a binder, and sodium carboxymethyl cellulose as a thickener at a mass ratio of 98: 1: 1, adding deionized water, and stirring the mixture well with a vacuum mixer to obtain a negative electrode slurry, in which a solid content is 75 wt%. Coating one surface of 12 µm-thick negative current collector copper foil with the negative electrode slurry evenly, and drying the copper foil at 85 °C to obtain a negative electrode plate coated with a negative electrode material layer on a single side. Repeating the foregoing steps on the other surface of the copper foil to obtain a negative electrode plate coated with the negative material layer on both sides.

Subsequently, performing cold pressing, cutting, and slitting for the negative electrode plate, and drying the electrode plate in an 85 °C vacuum environment for 12 hours to obtain a negative electrode plate of 74 mm × 867 mm in size and 0.113 mm in thickness.

### Embodiment 11

Identical to Embodiment 10 except that the relevant preparation parameters are adjusted according to Table 1A and Table 1B.

### Embodiment 12

Identical to Embodiment 1 except that the operations of <Preparing a separator> are different and the relevant preparation parameters are adjusted according to Table 1A and Table 1B.

The separator is a 7 µm-thick porous polypropylene film with a pore diameter of 0.1 µm.

### Embodiment 13

Identical to Embodiment 12 except that the relevant preparation parameters are adjusted according to Table 1A and Table 1B.

### Comparative Embodiment 1

Identical to Embodiment 1 except that the operations of <Preparing an insulation layer slurry> are different from Embodiment 1.

2) Mixing aluminum oxide as an insulating inorganic compound and acrylic acid as a binder at a mass ratio of 97: 3, but without adding polymer particles. Adding deionized water, and stirring well with a vacuum mixer to obtain an insulation layer slurry in which the solid content is 17 wt%. Applying the insulation layer slurry evenly onto a surface of the negative electrode plate prepared above, and drying the electrode plate at 85 °C, where the thickness of the insulation layer is 5 µm. Subsequently, performing cold pressing, cutting, and slitting for the negative electrode plate coated with the insulation layer, and drying the electrode plate in an 85 °C vacuum environment for 12 hours to obtain a composite negative electrode plate of 74 × 867 mm in size and 0.113 mm in thickness containing the insulation layer.

### Comparative Embodiments 2 to 7

Identical to Embodiment 1 except that the relevant preparation parameters are adjusted according to Table 1A and Table 1B.

### Test methods and devices:

### Method for the testing the diameter D of polymer particles:

Impacting an electrode plate test-piece vertically by using an ion beam, so as to obtain a fresh cross-section. Capturing an image of the cross-section by using a scanning electron microscope (SEM). Measuring the diameter of an equivalent largest circle of the polymer particles in the insulation layer of the cross-section, where the diameter D of the polymer particles is equal to the diameter of the equivalent largest circle.

### Method for testing the thickness d of the insulation layer:

Impacting an electrode plate test-piece vertically by using an ion beam, so as to obtain a fresh cross-section. Capturing an image of the cross-section by using an SEM. Capturing 20 SEM images at equal distances at a magnification of 1000× or above (for example, 1000×) if the length of the cross-section is greater than or equal to 1 mm (for example, is 1 mm). Selecting measurement sites of uniform flatness in each image to measure the thickness of the insulation layer. Counting the thickness data of all measurement sites, and obtaining a median value of the thicknesses, so that the thickness d of the insulation layer is equal to the median value of the thicknesses.

### Method for testing the number of polymer particles exposed per unit area of 45 µm × 27 µm on the surface of the insulation layer:

(1) Removing an electrode plate test-piece from a lithium-ion battery, and cutting the electrode plate into a plurality of specimens of 4×4 mm each (for example, 5 specimens).
(2) Observing the surface of the specimen in the SEM image. Magnifying the image until the polymer particles exposed on the surface of the specimen can be seen clearly. Selecting 10 regions of 45×27 µm each randomly in the field of view for observing, and capturing corresponding images of the 10 observation regions. Recording the area of the image in each observation region and the number of polymer particles with a maximum length of 1 µm to 20 µm in the 10 observation regions.
(3) Selecting 3 specimens of 4×4 mm each. Repeating step (2) to count the number of polymer particles with a maximum length of 1 µm to 20 µm in the observation regions of all the specimens, and obtaining a median number of the polymer particles to serve as the number of polymer particles in a 45×27 µm observation region.

### Testing the bonding strength:

Discharging the lithium-ion batteries prepared in each embodiment and comparative embodiment at a rate (C-rate) of 0.1 C until the voltage reaches a lower limit of the operating voltage; taking out a composite of the negative electrode plate and the separator from each lithium-ion battery prepared in Embodiments 1 to 7, Embodiments 10 to 11, and Comparative Embodiments 2 to 7; spreading out the composite of the negative electrode plate and the separator, air-drying the composite for 1 hour (h), and then cutting out a specimen of 30×150 mm from the composite by using a cutting blade. Taking out a composite of the positive electrode plate and the separator from each lithium-ion battery prepared in Embodiments 8 to 9, spreading out the composite of the positive electrode plate and the separator, air-drying the composite for 1 h, and then cutting out a specimen of 30×150 mm from the composite by using a cutting blade. Fixing the specimen onto a test fixture of a Go Tech tensile machine to measure the bonding strength. Stretching the specimen at a peel angle of 90° at a speed of 50 mm/min. The tensile displacement in a single stretching operation is 60 mm. When the peeling interface is an interface between the insulation layer and the separator layer, the measured value is the bonding strength between the insulation layer and the separator.

### Testing the porosity of the electrode plate:

Discharging a lithium-ion battery prepared in each embodiment and comparative embodiment at a rate of 0.1 C until the voltage reaches a lower limit of the operating voltage; taking out a negative electrode plate alone from each lithium-ion battery prepared in Embodiments 1 to 7, Embodiments 10 to 11, and Comparative Embodiments 2 to 7; and then soaking the negative electrode plate in a pure DMC solvent for cleaning for 1 h, and repeating the soaking operation for three times. Spreading out the negative electrode plate, air-drying the negative electrode plate for 4 h, and then punching the air-dried negative electrode plate into more than 40 discs of 10 mm each in diameter, with the surface of the discs being flat and even without notches. Taking out a positive electrode plate alone from each lithium-ion battery prepared in Embodiments 8 to 9, and then soaking the positive electrode plate in a pure DMC solvent for cleaning for 1 h, and repeating the soaking operation for three times. Spreading out the positive electrode plate, air-drying the positive electrode plate for 4 h, and then punching the air-dried positive electrode plate into more than 40 discs of 10 mm each in diameter, with the surface of the discs being flat and even without notches. Obtaining a true volume V₂ of the electrode plate specimen by using a true density test meter, calculating the apparent volume as: Vi = S × H (S is the surface area of the specimen, H is the thickness of the specimen), and calculating the porosity as: porosity = (V₁ - V₂)/V₁ × 100%.

In this test method, the porosity is defined as a ratio of the pore volume of a specimen to the total volume of the specimen, and reflects the magnitude of pores in the specimen. The porosity is essential to ion transport in a lithium-ion battery. The true volume is defined as a volume of a specimen excluding pores.

### Testing the severity of lithium plating of a lithium-ion battery:

Leaving a lithium-ion battery prepared in each embodiment and comparative embodiment to stand statically in a 25 °C thermostat, and keeping the temperature constant for 1 h. Charging the battery at a constant current rate of 1 C until the voltage reaches 4.45 V. Charging the battery at a constant voltage of 4.45 V until the current drops to 0.02 C. Leaving the battery to stand for 3 minutes, and then discharging the battery at a constant current rate of 1 C until the voltage reaches 3 V, and leaving the battery to stand for 3 minutes, thereby completing one cycle. Subsequently, cycling the battery for 10 cycles by repeating the above operations. Charging the lithium-ion battery fully again until a voltage of 4.45 V upon completion of the cycling, and then disassembling the lithium-ion battery, and observing whether lithium plating occurs on the surface of the negative electrode plate.

### Testing the area:

Discharging a lithium-ion battery prepared in each embodiment and comparative embodiment at a rate of 0.1 C until the voltage reaches a lower limit of the operating voltage; taking out a negative electrode plate alone from each lithium-ion battery prepared in Embodiments 1 to 7, Embodiments 10 to 11, and Comparative Embodiments 2 to 7; and then soaking the negative electrode plate in a pure DMC solvent for cleaning for 1 h, and repeating the soaking operation for three times. Spreading out the negative electrode plate, air-drying the negative electrode plate for 4 h, and then cutting the air-dried negative electrode plate into small sheets of 4×4 mm each. Taking out a positive electrode plate alone from each lithium-ion battery prepared in Embodiments 8 to 9, and then soaking the positive electrode plate in a pure DMC solvent for cleaning for 1 h, and repeating the soaking operation for three times. Spreading out the positive electrode plate, air-drying the positive electrode plate for 4 h, and then cutting the air-dried positive electrode plate into small sheets of 4×4 mm each. Observing the specimen by using SEM:

Observing an SEM image of the specimen in a field of view in a direction perpendicular to the surface of the electrode plate specimen, so that polymer particles exposed on the surface of the insulation layer are seen or an exposed surface of a cluster of polymers is seen. Using a maximum distance between two points in a projection plane in the vertical direction as an equivalent circle diameter D of the polymer particle or the exposed surface of the cluster of polymers, and calculating the exposed area of a single polymer particle or the exposed surface of a cluster of polymers according to the circle area S = π × (D/2)2.

**Table 1A Preparation parameters and test results of each embodiment and comparative embodiment (To Be Continued)**

| | Dv₅₀ of polymer particles (µm) | Thickness d of insulation layer (µm) | k₁ | Number of polymer particles exposed per unit area on surface of insulation layer (EA/45 µm × 27 µm) |
|---|---|---|---|---|
| Embodiment 1 | 1 | 0.67 | 1.5 | 15 |
| Embodiment 2 | 6 | 4 | 1.5 | 15 |
| Embodiment 3 | 20 | 13.3 | 1.5 | 15 |
| Embodiment 4 | 6 | 6 | 1 | 15 |
| Embodiment 5 | 6 | 2 | 3 | 15 |
| Embodiment 6 | 6 | 2 | 3 | 2 |
| Embodiment 7 | 6 | 2 | 3 | 20 |
| Embodiment 8 | 6 | 2 | 3 | 40 |
| Embodiment 9 | 6 | 2 | 3 | 60 |
| Embodiment 10 | 6 | 6 | 1 | 15 |
| Embodiment 11 | 20 | 13.3 | 1.5 | 15 |
| Embodiment 12 | 6 | 2 | 3 | 2 |
| Embodiment 13 | 6 | 2 | 3 | 60 |
| Comparative Embodiment 1 | / | / | / | / |
| Comparative Embodiment 2 | 0.6 | 0.4 | 1.5 | 15 |
| Comparative Embodiment 3 | 24 | 16 | 1.5 | 15 |
| Comparative Embodiment 4 | 6 | 15 | 0.4 | 15 |
| Comparative Embodiment 5 | 6 | 1.67 | 3.6 | 15 |
| Comparative Embodiment 6 | 6 | 2 | 3 | 1 |
| Comparative Embodiment 7 | 6 | 2 | 3 | 67 |

**Table 1B Preparation parameters and test results of each embodiment and comparative embodiment (Continued)**

| | Exposed area of a single polymer particle or exposed surface of a cluster of polymers (µm²) | Separator substrate | Bonding strength between insulation layer and separator (N/m) | Electrode plate porosity (%) | Lithium plating |
|---|---|---|---|---|---|
| Embodiment 1 | 20 to 315 | PE | 13.1 | 17.8 | No |
| Embodiment 2 | 20 to 315 | PE | 29.4 | 15.5 | No |
| Embodiment 3 | 20 to 315 | PE | 47.5 | 12.7 | No |
| Embodiment 4 | 20 to 315 | PE | 16.9 | 14.9 | No |
| Embodiment 5 | 20 to 315 | PE | 45.4 | 16.1 | No |
| Embodiment 6 | 20 to 315 | PE | 15.6 | 17.1 | No |
| Embodiment 7 | 20 to 315 | PE | 52.4 | 13.2 | No |
| Embodiment 8 | 20 to 315 | PE | 59.7 | 11.7 | No |
| Embodiment 9 | 20 to 315 | PE | 67.7 | 10.2 | No |
| Embodiment 10 | 20 to 315 | PE | 17.1 | / | No |
| Embodiment 11 | 20 to 315 | PE | 45.6 | / | No |
| Embodiment 12 | 20 to 315 | PP | 15 | 16.9 | No |
| Embodiment 13 | 20 to 315 | PP | 67 | 9.8 | No |
| Comparative Embodiment 1 | / | PE | 7.1 | 15.2 | No |
| Comparative Embodiment 2 | 20 to 315 | PE | 10 | 19 | No |
| Comparative Embodiment 3 | 20 to 315 | PE | 79 | 7.6 | Lithium plating |
| Comparative Embodiment 4 | 20.32 to 315 | PE | 9.1 | 18.8 | No |
| Comparative Embodiment 5 | 20.32 to 315 | PE | 51 | 8.9 | Lithium plating |
| Comparative Embodiment 6 | 20.32 to 315 | PE | 8.3 | 17.2 | No |
| Comparative Embodiment 7 | 20.32 to 315 | PE | 78.3 | 8.5 | Lithium plating |

| | | | | | |
|---|---|---|---|---|---|
| Note: "/" in Table 1A and Table 1B indicates nonexistence of the corresponding parameter or material. | | | | | |

As can be seen from Embodiments 1 to 13 and Comparative Embodiment 1, after the insulation layer on the surface of the electrode plate is doped with the polymer particles, the bonding strength between the electrode plate and the separator can be enhanced significantly, thereby enhancing the bonding effect between the electrode plate and the separator, increasing the deformation resistance of the electrochemical device, and in turn, improving both stability and safety performance of the electrochemical device.

As can be seen from Embodiments 1 to 3 and Comparative Embodiments 2 to 3, when the particle diameter Dv₅₀ of the polymer particles added in the insulation layer is unduly small (as in Comparative Embodiment 2), the bonding strength between the electrode plate and the separator will be decreased, the interfacial bonding effect of the electrode plate will be insignificant, thereby hindering the improvement of the stability of the electrochemical device. When the particle diameter Dv₅₀ of the polymer particles added in the insulation layer is unduly large (as in Comparative Embodiment 3), the porosity of the electrode plate will be decreased, and lithium plating will occur in the lithium-ion battery, thereby posing some safety hazards and hindering the improvement of safety of the electrochemical device.

As can be seen from Embodiment 2, Embodiments 4 to 5, and Comparative Embodiments 4 to 5, when k₁ is unduly small, a relatively large part of the volume of a single polymer particle is buried beneath the surface of the insulation layer, thereby resulting in relatively low bonding strength between the electrode plate and the separator, making the interfacial bonding effect of the electrode plate insignificant, and in turn, hindering the improvement of the stability of the electrochemical device. When k₁ is unduly large, a relatively large part of the volume of a single polymer particle is exposed above the surface of the insulation layer. However, because a relatively large part of the volume of the polymer particles is exposed on the surface of the insulation layer, partial pores on the surface of the electrode plate are blocked after completion of a hot-pressing process during preparation of the lithium-ion battery, thereby resulting in a decrease in the porosity of the electrode plate, resulting in lithium plating in the lithium-ion battery, and in turn, posing some safety hazards and hindering the improvement of safety of the electrochemical device.

As can be seen from Embodiments 5 to 9 and Comparative Embodiments 6 to 7, when the number of polymer particles exposed per unit area of the insulation layer is unduly small, the bonding strength between the electrode plate and the separator will be relatively low, and the interfacial bonding effect of the electrode plate will be insignificant, thereby hindering the improvement of the stability of the electrochemical device. When the number of polymer particles exposed per unit area of the insulation layer is unduly large, although the bonding strength between the electrode plate and the separator is increased, the large number of polymer particles exposed on the surface of the insulation layer results in a decrease in the porosity of the electrode plate, impairs the kinetic performance of the lithium-ion battery, and gives rise to lithium plating in the lithium-ion battery, thereby posing some safety hazards and hindering the improvement of safety of the electrochemical device.

As can be seen from Embodiments 3 and 11 and Embodiments 4 and 10, applying the insulation layer of the same design onto the positive electrode plate or negative electrode plate does not exert a significant effect on the bonding strength between the insulation layer and the separator. That is because the design of the insulation layer does not change the contact surface between the separator and the insulation layer when applied to the positive electrode plate or negative electrode plate. Therefore, the bonding effect between the electrode plate and the separator can still be improved by the added polymer particles.

As can be seen from Embodiments 6 and 12 and Embodiments 9 and 13, when the material of the separator substrate is the same as the material of the polymer in the insulation layer, the bonding effect between the electrode plate and the separator does not deteriorate even though no binder layer is applied onto the surface of the separator, thereby simplifying the design of the separator. A reason is that, when the material of the separator substrate is the same as the material of the polymer in the insulation layer, based on the "like dissolves like" principle, a good bonding effect can be achieved between the separator substrate and the polymer in the insulation layer in a hot-pressing process during preparation of the lithium-ion battery, thereby improving the stability of the electrochemical device.

As can be seen from Embodiments 1 to 13, when the particle diameter Dv₅₀ of the polymer particles added in the insulation layer, k₁, and the number of the polymer particles exposed per unit area of the insulation layer fall within the ranges specified herein, the resulting electrochemical device exhibits both high stability and high safety.

What is described above is merely exemplary embodiments of this application, but is not intended to limit this application. Any modifications, equivalent replacements, improvements, and the like made without departing from the spirit and principles of this application still fall within the protection scope of this application.

## Claims

1. An electrode plate, comprising a current collector, an active material layer, and an insulation layer, wherein the active material layer is disposed between the current collector and the insulation layer; and
the insulation layer comprises an insulating inorganic compound, a binder, and a polymer, wherein the polymer comprises a polymer particle, and a number of the polymer particles exposed in any 45 µm × 27 µm region on a surface of the insulation layer is 2 to 60.

2. The electrode plate according to claim 1, wherein Dv₅₀ of the polymer particle is 1 µm to 20 µm, and a ratio of the Dv₅₀ of the polymer particle to a thickness d of the insulation layer is k₁, k₁= Dv₅₀/d, satisfying: 1 ≤ k₁ ≤ 3.

3. The electrode plate according to claim 1, wherein the polymer particle comprises a particle of a diameter D, and a ratio of the diameter D to a thickness d of the insulation layer is k₂, k₂= D/d, satisfying: 1 < k₂ ≤ 3.

4. The electrode plate according to claim 1, wherein an exposed area of a single particle among the polymer particles exposed on the surface of the insulation layer is 20 µm² to 315 µm².

5. The electrode plate according to claim 1, wherein the insulating inorganic compound comprises at least one of aluminum oxide, titanium dioxide, magnesium oxide, zirconium oxide, or zinc oxide.

6. The electrode plate according to claim 1, wherein the polymer comprises at least one of polyvinylidene fluoride, polyethylene, or polypropylene.

7. The electrode plate according to claim 1, wherein the electrode plate is at least one of a positive electrode plate or a negative electrode plate.

8. An electrochemical device, comprising a separator and the electrode plate according to any one of claims 1 to 7, wherein
when a substrate of the separator and the polymer are made of an identical material, a surface, in contact with the insulation layer, of the separator, is coated with no binder layer; or
when a substrate of the separator and the polymer are made of different materials, a surface, in contact with the insulation layer, of the separator, is coated with a binder layer.

9. The electrochemical device according to claim 8, wherein a binder in the binder layer comprises at least one of polyvinylidene fluoride, polyacrylate salt, polyacrylic acid, polymethyl methacrylate, polyacrylonitrile, polyamide, polyimide, aramid fibers, polyacrylate ester, styrene-butadiene rubber, polyacrylamide, or polyolefin.

10. An electronic device, wherein the electronic device comprises the electrochemical device according to any one of claims 8 to 9.
